(19) Europäisches Patentamt
European Patent Office
Office européen des brevets

(11) **EP 4 786 040 A1**

(12) **EUROPEAN PATENT APPLICATION**
published in accordance with Art. 153(4) EPC

(43) Date of publication:
**05.08.2026 Bulletin 2026/32**

(21) Application number: **24871653.2**

(22) Date of filing: **27.08.2024**

(51) International Patent Classification (IPC):
**B01J 2/06** (2006.01)          **B01J 13/06** (2006.01)

(52) Cooperative Patent Classification (CPC):
**B01J 2/06; B01J 13/06**

(86) International application number:
**PCT/JP2024/030382**

(87) International publication number:
**WO 2025/069852 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 JP 2023166188**

(71) Applicant: **Morishita Jintan Co., Ltd.
Osaka-shi, Osaka 540-8566 (JP)**

(72) Inventors:
• **YOSHIKADO, Masatomo**
  **Hirakata-shi, Osaka 573-0128 (JP)**
• **NISHIKAWA, Takehiro**
  **Hirakata-shi, Osaka 573-0128 (JP)**
• **NAKANO, Osami**
  **Hirakata-shi, Osaka 573-0128 (JP)**
• **KUWAHARA, Katsumasa**
  **Hirakata-shi, Osaka 573-0128 (JP)**

(74) Representative: **dompatent
Partnerschaft von
Patentanwälten und Rechtsanwälten mbB
Deichmannhaus am Dom
Bahnhofsvorplatz 1
50667 Köln (DE)**

(54) **METHOD FOR MANUFACTURING SEAMLESS CAPSULE**

(57)      A method for manufacturing a seamless capsule 50 comprises dropping droplets from a distal end 1a of a nozzle 1 into cooling liquid 49 in a flow path within a forming tube 10 to form a seamless wet capsule 50w from the droplets. The nozzle 1 includes an inclined portion 25 that is inclined toward the inside of the nozzle 1 as it extends from an intermediate portion toward the distal end 1a. A distance Z between an apex 27 of a space defined by a virtual surface 26 obtained by extending an outer surface 25a of the inclined portion 25 downward beyond the distal end 1a and an upper end 10a of the forming tube 10 satisfies -10 mm $\leq$ Z $\leq$ 6 mm. When Z < 0, the apex 27 is located below the upper end 10a of the forming tube 10. When Z > 0, the apex 27 is located above the upper end 10a of the forming tube 10.

Fig. 4

**Description**

TECHNICAL FIELD

The present invention relates to a method for manufacturing a seamless capsule.

BACKGROUND ART

Patent Document 1 discloses a method for manufacturing a spherical seamless capsule obtained by coating a filling substance with a film substance. In this manufacturing method, droplets are discharged downward from a distal end of a nozzle into cooling liquid (curing liquid) in a flow path within a forming tube. The nozzle is tapered from an intermediate portion. A distal end surface having an opening through which droplets are discharged is provided at the distal end of the nozzle. The distal end surface is orthogonal to a central axis of the nozzle and is oriented horizontally. Further, in this manufacturing method, a so-called in-air nozzle method in which the distal end surface of the nozzle is positioned above a liquid level of the cooling liquid is applied. In a case where an outer diameter of the seamless capsule to be manufactured is d, a distance between the distal end surface of the nozzle and the liquid level is set within a range from 0.5d to 3d.

PRIOR ART DOCUMENT

PATENT DOCUMENT

Patent Document 1: JP-A-2002-136576

SUMMARY OF THE INVENTION

PROBLEMS TO BE SOLVED BY THE INVENTION

However, there is still room for improvement in the method for manufacturing a seamless capsule in terms of stably manufacturing a high-quality seamless capsule, such as a capsule having no cracks in a film.
An object of the present invention is to stably manufacture a high-quality seamless capsule.

SOLUTIONS TO THE PROBLEMS

One aspect of the present invention provides a method for manufacturing a seamless capsule, the method comprising: dropping droplets from a distal end of a nozzle into cooling liquid in a flow path within a forming tube to form a seamless wet capsule from the droplets, wherein the nozzle includes an inclined portion that is inclined toward an inside of the nozzle as the inclined portion extends from an intermediate portion of the nozzle toward the distal end, a distance Z, defined as a distance between an apex of a space defined by a virtual surface obtained by extending an outer surface of the inclined portion downward beyond the distal end and an upper end of the forming tube, satisfies -10 mm $\leq$ Z $\leq$ 6 mm, and when Z < 0, the apex is located below the upper end of the forming tube, and when Z > 0, the apex is located above the upper end of the forming tube.

EFFECTS OF THE INVENTION

According to the present invention, a high-quality seamless capsule can be stably manufactured.

BRIEF DESCRIPTION OF THE DRAWINGS

[Fig. 1] Fig. 1 is a schematic view of a manufacturing apparatus in which a method for manufacturing a seamless capsule according to an embodiment is implemented.
[Fig. 2] Fig. 2 is an enlarged view of a nozzle and a forming tube of the manufacturing apparatus of Fig. 1.
[Fig. 3] Fig. 3 is a horizontal cross-sectional view of the nozzle taken along a line III-III in Fig. 2.
[Fig. 4] Fig. 4 is a view for explaining a distance between a virtual apex defined by the nozzle and an upper end of the forming tube.
[Fig. 5] Fig. 5 is an enlarged view of a nozzle and a forming tube according to a first modification.
[Fig. 6A] Fig. 6A is a horizontal cross-sectional view of a nozzle according to a second modification.

[Fig. 6B] Fig. 6B is a horizontal cross-sectional view of a nozzle according to a third modification.

[Fig. 7] Fig. 7 is a front view of a nozzle according to a fourth modification.

[Fig. 8A] Fig. 8A is a front view of a nozzle according to a fifth modification.

[Fig. 8B] Fig. 8B is a front view of a nozzle according to a sixth modification.

DETAILED DESCRIPTION

Hereinafter, an embodiment will be described with reference to the drawings. Throughout the drawings, the same or corresponding elements are denoted by the same reference numerals, and a repeated description thereof will be omitted.

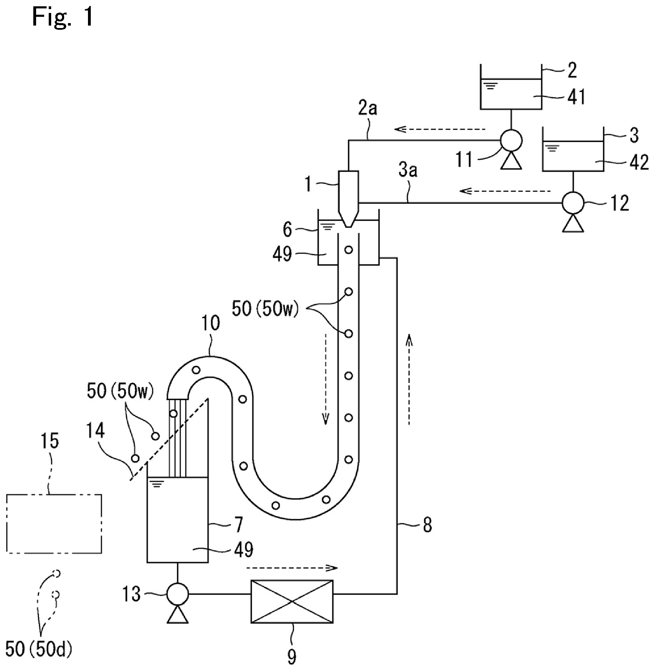

The manufacturing apparatus illustrated in Fig. 1 manufactures a seamless capsule 50 using a manufacturing method according to the present embodiment. The manufacturing apparatus includes a nozzle 1, a content liquid tank 2, a content liquid supply pipe 2a, a film liquid tank 3, a film liquid supply pipe 3a, a cooling liquid reservoir 6, a cooling liquid tank 7, a cooling liquid supply pipe 8, a cooling device 9, a forming tube 10, pumps 11 to 13, a screen 14, and a dryer 15.

The nozzle 1 is connected to the content liquid tank 2 via the content liquid supply pipe 2a, and is connected to the film liquid tank 3 via the film liquid supply pipe 3a. The content liquid tank 2 stores a content liquid 41. The content liquid 41 is pumped from the content liquid tank 2 to the nozzle 1 via the content liquid supply pipe 2a by the pump 11. The content liquid 41 is also referred to as a filling liquid, and becomes the content 51 described later when filling the interior of the seamless capsule 50. The film liquid tank 3 stores a film liquid 42. The film liquid 42 is pumped from the film liquid tank 3 to the nozzle 1 via the film liquid supply pipe 3a by the pump 12.

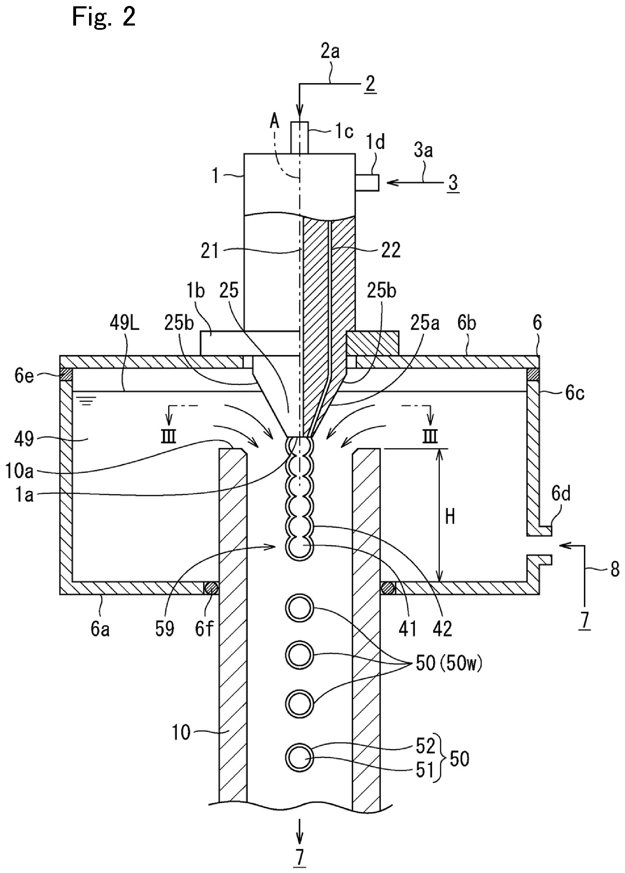

Referring to Figs. 1 and 2, the cooling liquid reservoir 6 is connected to the cooling liquid tank 7 via the cooling liquid supply pipe 8. The cooling liquid tank 7 stores a cooling liquid 49. The cooling liquid 49 is also referred to as a solidifying liquid or a coagulating liquid. The cooling liquid 49 is pumped from the cooling liquid tank 7 to the cooling liquid reservoir 6 via the cooling liquid supply pipe 8 by the pump 13 and cooled by the cooling device 9 in the process. The cooling liquid 49 is contained in an internal space of the cooling liquid reservoir 6. The cooling liquid reservoir 6 stores the cooling liquid 49 flowing into the forming tube 10 in the internal space, in a state where part of the nozzle 1 (an inclined portion 25 described later) and an upper end portion of the forming tube 25 are arranged in the internal space of the cooling liquid reservoir 6. The cooling liquid reservoir 6 has a hollow structure, and an inner surface of the cooling liquid reservoir 6 defines the internal space. Specifically, the cooling liquid reservoir 6 has a bottom wall 6a, an upper wall 6b, and a peripheral wall 6c, and the inner surfaces of these walls define the internal space. The bottom wall 6a and the upper wall 6b are substantially horizontal and separated from each other in a vertical direction. The peripheral wall 6c extends upward from a peripheral edge portion of the bottom wall 6a. A peripheral edge portion of the upper wall 6b is located above the peripheral wall 6c, and a spacer 6e is provided between the peripheral edge portion of the upper wall 6b and an upper end portion of the peripheral wall 6c. The spacer 6e is a member that defines a distance between the upper wall 6b and the peripheral wall 6c, and is replaceable. The cooling liquid reservoir 6 is provided with a cooling liquid inflow port 6d through which the cooling liquid 49 flows into the internal space. A downstream end of the cooling liquid supply pipe 8 is connected to the cooling liquid inflow port 6d. The upper wall 6b is configured to allow a space above a liquid level 49L of the cooling liquid 49 to be open to the atmosphere. The cooling liquid 49 is returned from the cooling liquid reservoir 6 to the cooling liquid tank 7 via the forming tube 10. The forming tube 10 is open at both ends and forms a flow path through which the cooling liquid 49 flows. In the examples of Figs. 1 and 2, the cooling liquid 49 flows through the flow path within the forming tube 10 under hydraulic head pressure. In a modification of the present embodiment, the cooling liquid 49 can flow through the flow path within the forming tube 10 using discharge pressure of the pump 13. In such a modification, the cooling liquid reservoir 6 in which the internal space is sealed may be used.

The spacer 6e only needs to be able to separate the upper wall 6b and the peripheral wall 6c, and a material and a shape of the spacer 6e can be arbitrarily selected according to the purpose at the time of manufacturing. Examples of the material of the spacer 6e include resin, metal, natural rubber, and synthetic rubber. In plan view as viewed in the vertical direction, the spacer 6e can have a shape covering the entire portion facing the peripheral wall 6c in the peripheral edge portion of the upper wall 6b, or a shape in which part of the portion facing the peripheral wall 6c is interrupted.

An upper end 10a (one end, upstream end) of the forming tube 10 is open in the internal space of the cooling liquid reservoir 6. A central axis of the forming tube 10 is oriented vertically at an upper end portion of the forming tube 10, and the upper end 10a of the forming tube 10 is oriented horizontally. A cross section of the forming tube 10 typically has a circular shape. The forming tube 10 extends downward from the upper end 10a, passes through the bottom wall 6a of the cooling liquid reservoir 6, is bent upward once, is bent downward again, and terminates. A distance H between the upper end 10a and the inner surface of the bottom wall 6a can be changed, and a sealing 6f that prevents the cooling liquid 49 from flowing out is provided between the forming tube 10 and the bottom wall 6a. An opening at the other end (downstream end) of the forming tube 10 is located above the cooling liquid tank 7 and directed downward. The cooling liquid 49 is discharged from the opening at the other end of the forming tube 10 and collected in the cooling liquid tank 7. The upper end portion of the forming tube 10 is a portion of the forming tube 10 protruding upward from the inner surface, particularly an inner lower surface, of the cooling liquid tank 7 defining the internal space. The inner lower surface of the cooling liquid tank 7 is the inner surface of the bottom wall 6a.

The sealing 6f only needs to be able to prevent the cooling liquid 49 from flowing out, and a material of the sealing 6f can be arbitrarily selected according to the purpose at the time of manufacturing. Examples of the material of the sealing 6f include resin, metal, natural rubber, and synthetic rubber.

Referring to Fig. 2, the nozzle 1 is generally cylindrical. A central axis A of the nozzle 1 is oriented vertically. A flange portion 1b in a plate shape protruding in a radial direction is provided at an intermediate portion in an axial direction of the nozzle 1. The flange portion 1b is supported on an outer (upper) surface of the upper wall 6b of the cooling liquid reservoir 6. The nozzle 1 protrudes upward from the upper wall 6b at a portion closer to the proximal end in the axial direction than the flange portion 1b. A content liquid inflow port 1c for allowing the content liquid 41 to flow into the nozzle 1 and a film liquid inflow port 1d for allowing the film liquid 42 to flow into the nozzle 1 are provided in a portion on the proximal end side. The nozzle 1 passes through the upper wall 6b on the distal end side in the axial direction with respect to the flange portion 1b and enters the internal space of the cooling liquid reservoir 6 from above.

The flange portion 1b is a member fixed to the nozzle 1 and is replaceable. In fixing the flange portion 1b to the nozzle 1, a fixing tool such as a screw can be used. The flange portion 1b is supported on the upper surface of the upper wall 6b as described above, and thus, a position of the nozzle 1 can be adjusted by changing a thickness of the flange portion 1b in the vertical direction. A material of the flange portion 1b can be arbitrarily selected according to the purpose at the time of manufacturing. Examples of the material of the flange portion 1b include resin, metal, natural rubber, and synthetic rubber. A shape of the flange portion 1b is not particularly limited as long as the nozzle 1 can be installed on the upper wall 6b via the flange portion 1b. For example, the flange portion 1b may have a circular shape, an elliptical shape, or a polygonal shape in plan view as viewed in the vertical direction.

In the internal space of the cooling liquid reservoir 6, the liquid level 49L of the cooling liquid 49 is located between the upper end 10a of the forming tube 10 and the inner surface (lower surface) of the upper wall 6b. A position of the liquid level 49L can be controlled in this manner by adjusting the flow rate of the pump 13. The distal end 1a of the nozzle 1 is located below the liquid level 49L. In other words, the distal end portion of the nozzle 1 is immersed in the cooling liquid 49 received in the cooling liquid reservoir 6.

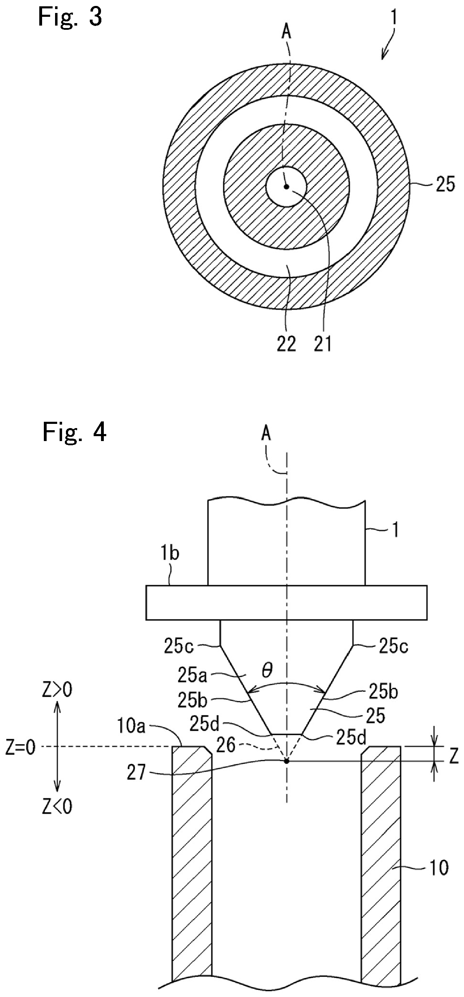

Referring to Figs. 2 and 3, the nozzle 1 has a central nozzle 21 and an outermost nozzle 22. Both the central nozzle 21 and the outermost nozzle 22 extend in the axial direction inside the nozzle 1. The central nozzle 21 has a circular cross section centered on the central axis A. The outermost nozzle 22 is concentric with the central nozzle 21, surrounds the central nozzle 21, and has an annular cross section centered on the central axis A. One end (upper end, upstream end) of the central nozzle 21 is connected to the content liquid inflow port 1c. One end (upper end, upstream end) of the outermost nozzle 22 is connected to the film liquid inflow port 1d. The other end (lower end, downstream end) of the central nozzle 21 and the other end (lower end, downstream end) of the outermost nozzle 22 are open at the distal end 1a of the nozzle 1. The distal end 1a of the nozzle 1 forms a flat distal end surface orthogonal to the central axis A. The central nozzle 21 and the outermost nozzle 22 are open at the distal end surface.

The nozzle 1 includes an inclined portion 25 inclined toward the inside of the nozzle 1 as the inclined portion 25 extends from the intermediate portion of the nozzle 1 toward the distal end 1a. The inclined portion 25 is provided at a portion on the distal end side in the axial direction with respect to the flange portion 1b.

As can be seen from Figs. 2 and 4, in a vertical cross section of the nozzle 1 passing through the central axis A of the nozzle 1, an outline of the outer surface 25a of the inclined portion 25 is represented as a pair of straight lines 25b. Each of the straight lines 25b connects an upper end 25c and a lower end 25d of the outer surface 25a of the inclined portion 25. The pair of straight lines 25b is inclined so as to approach each other toward the distal end 1a. The pair of straight lines 25b is symmetric with respect to the central axis A. The lower ends of the pair of straight lines 25b are each connected to the distal end surface represented as a horizontal line orthogonal to the central axis A. As can be seen from Fig. 3, in the present embodiment, in a horizontal cross section of the nozzle 1 passing through the central axis A of the nozzle 1, an outline of the outer surface of the inclined portion 25 is circular.

As described above, in the present embodiment, the inclined portion 25 has a truncated cone shape. Each of the straight lines 25b is a generatrix of a truncated cone.

Here, referring to Fig. 4, a virtual surface 26 obtained by extending the outer surface 25a of the inclined portion 25 downward beyond the distal end 1a of the nozzle 1 is assumed. The virtual surface 26 is represented by extension lines extending downward from the pair of straight lines 25b in the vertical cross section passing through the central axis A of the nozzle 1. The virtual surface 26 comes to a point on the central axis A. In other words, downward extension lines of the pair of straight lines 25b intersect each other on the central axis A. This intersection is an apex 27 of a space defined by the virtual surface 26. In the present embodiment in which the cross section of the outer surface 25a of the inclined portion 25 is circular, this virtual space has a conical shape with the distal end surface of the nozzle 1 in which the central nozzle 21 and the outermost nozzle 22 are open as a bottom surface.

A distance Z between the apex 27 and the upper end 10a of the forming tube 10 satisfies $-10\,\mathrm{mm} \leq Z \leq 6\,\mathrm{mm}$. The distance Z is a distance between the apex 27 and the upper end 10a in the vertical direction, and the vertical direction corresponds to an axial direction of the nozzle 1, a normal direction of the distal end surface of the nozzle 1, an axial direction of the forming tube 10, and a direction orthogonal to the opening at the upper end 10a of the forming tube 10. In a case where the apex 27 coincides with the upper end 10a of the forming tube 10, Z = 0. When Z < 0, the apex 27 is located below the upper end 10a of the forming tube 10, that is, in the flow path within the forming tube 10. When Z > 0, the apex 27 is located above the upper end 10a of the forming tube 10, that is, outside the forming tube 10. Note that Fig. 4 illustrates a case where Z < 0, and more specifically, illustrates a case where the distal end 1a of the nozzle 1 is located above the upper end 10a of the forming tube 10 while Z < 0. However, this is merely an example.

In the present embodiment, the distance Z is only required to fall within a range of -10 mm ≤ Z ≤ 6 mm, but the distance Z may be, for example, 5 mm or less, 4 mm or less, 3.5 mm or less, 3.2 mm or less, 3 mm or less, 2 mm or less, 1 mm or less, 0.5 mm or less, or 0 mm or less. Further, the distance Z may be -9.7 mm or more, -9 mm or more, -8 mm or more, -7 mm or more, -6 mm or more, or -5 mm or more.

In setting the distance Z between the apex 27 and the upper end 10a of the forming tube 10, in the present embodiment, a thickness of the spacer 6e, a thickness of the flange portion 1b, and a distance H between the upper end 10a and the inner surface of the bottom wall 6a can be changed, but it is not essential to change all three of these. In other words, at least one of the thickness of the spacer 6e, the thickness of the flange portion 1b, or the distance H between the upper end 10a and the inner surface of the bottom wall 6a may be changed. In other words, at least one portion of the nozzle 1, the upper wall 6b, or the forming tube 10 may be configured to be vertically movable along the central axis A of the nozzle 1.

Further, in the vertical cross section of the nozzle 1 passing through the central axis A of the nozzle 1, an angle θ formed between a pair of straight lines 25b each connecting the upper end 25c and the lower end 25d of the outer surface 25a of the inclined portion 25 is within a range from 20° to 70°.

Referring to Figs. 1 and 2, a method for manufacturing the seamless capsule 50 with such a manufacturing apparatus includes a forming step of dropping droplets from the distal end 1a of the nozzle 1 into the cooling liquid 49 in a flow path within the forming tube 10 to form a seamless wet capsule 50w from the droplets. In this forming step, the distal end 1a of the nozzle 1 is located below the liquid level 49L of the cooling liquid 49. In other words, a so-called dropping-in-liquid method is applied to the manufacturing apparatus and method according to the present embodiment.

The droplets dropped from the nozzle 1 include the content liquid 41 supplied from the content liquid tank 2 to the nozzle 1 and discharged from the central nozzle 21, and the film liquid 42 supplied from the film liquid tank 3 to the nozzle 1 and discharged from the outermost nozzle 22. The content liquid 41 is discharged downward from a central portion of the distal end surface. The film liquid 42 is discharged downward from a peripheral edge portion of the distal end surface and covers the content liquid 41 from the outer peripheral side. As described above, the nozzle 1 discharges a composite jet 59 containing the content liquid 41 and the film liquid 42 downward from the distal end surface thereof into the cooling liquid 49. The composite jet 59 extends downward from the distal end surface in the cooling liquid 49. The composite jet 59 breaks up into droplets at a lower end thereof due to surface tension. When the droplets become particles of a predetermined size and the film liquid 42 covers the entire content liquid 41, the film liquid 42 is solidified. As a result, the seamless capsule 50 is formed.

The seamless capsule 50 has a spherical shape as a whole, and includes the content 51 and a film layer 52 encapsulating the content 51. The film layer 52 is formed by solidification of the film liquid 42 and has no seam. The content 51 includes the content liquid 41, but a state of the content 51 may be a liquid, a semi-solid such as a gel, or a solid.

The composite jet 59 is ejected into the flow path within the forming tube 10, and the seamless capsule 50 is formed in the flow path within the forming tube 10. The formed seamless capsule 50 rides on the flow of the cooling liquid 49 in the forming tube 10 and is transferred along the forming tube 10. An upper opening of the cooling liquid tank 7 is covered with the screen 14. The screen 14 allows the cooling liquid 49 discharged from the opening at the other end of the forming tube 10 to pass through and prevents the seamless capsule 50 from entering the cooling liquid tank 7. The seamless capsule 50 blocked by the screen 14 is collected as a wet capsule 50w.

The collected wet capsule 50w may be a final product. The manufacturing apparatus may include a dryer 15 that dries the wet capsule 50w. A dry capsule 50d can be obtained by performing a drying step with the dryer 15 to dry the wet capsule 50w. In this manner, the wet capsule 50w may be an intermediate product of the dry capsule 50d, and the dry capsule 50d may be a final product.

The content liquid 41 is not particularly limited, and examples thereof include lipophilic or hydrophilic liquid substances, suspensions of these liquid substances and powders insoluble in the liquid substances, and mixed liquids of the liquid substances. In the content liquid 41, a blending agent such as an excipient, a stabilizer, a surfactant, an auxiliary agent, or a foaming agent may be blended as appropriate.

The film liquid 42 contains a natural polymer and water. The natural polymer is a component that causes the film liquid 42 to solidify, and is often water-soluble. The natural polymer is, for example, at least one selected from the group consisting of gelatin, casein, zein, pectin or a derivative thereof, alginic acid or a salt thereof, agar, gellan gum, carrageenan, furcellaran, chitosan, curdlan, starch, modified starch, pullulan, and mannan. The natural polymer is not limited to the above , and any component capable of forming the film layer 52 can be used.

The film liquid 42 may further contain a plasticizer. The plasticizer is a component that imparts flexibility to the film layer 52. In particular, in the dry capsule 50d, the plasticizer can maintain sufficient flexibility of the dried material of the film layer 52 and is less likely to cause cracks. Examples of the plasticizer include glycerin and sorbitol. The plasticizer is not limited to the above, and any component that can impart flexibility to the film layer 52 can be used.

The film liquid 42 may further contain an additive such as a pigment, a flavoring agent, a preservative, or a perfume according to the purpose of the seamless capsule 50.

The viscosity of the film liquid 42 at 60°C is preferably from 30 to 350 mPa·s, more preferably from 50 to 300 mPa·s, and still more preferably from 50 to 250 mPa·s. When the viscosity of the film liquid 42 is within the above range, the seamless capsule can be favorably manufactured using a dropping-in-liquid method.

A temperature of the cooling liquid 49 is typically 20°C or lower, preferably from 1 to 18°C. Note that a temperature of each of the liquids discharged from the nozzle 1 is not particularly limited, and is typically from 15 to 70°C, preferably from 20 to 65°C.

As the cooling liquid 49, oily components such as medium-chain fatty acid triglycerides (MCT), vegetable oils (such as coconut oil, sunflower oil, safflower oil, sesame oil, rapeseed oil, grape seed oil, and mixtures thereof), liquid paraffin, and mixtures thereof can be used.

Referring to Fig. 2, the cooling liquid 49 flows from the liquid level 49L toward the opening of the upper end 10a of the forming tube 10 in the cooling liquid reservoir 6. The inclined portion 25 of the nozzle 1 is arranged in the vicinity of the opening, and the cooling liquid 49 flows toward the opening of the forming tube 10 along the outer surface of the inclined portion 25. The flow along the outer surface is directed radially inward with respect to the nozzle 1 from the distal end 1a of the nozzle 1 toward the inside of the forming tube 10 that is further below the distal end 1a. In other words, the cooling liquid 49 flows along the virtual surface 26 formed by extending the outer surface of the inclined portion 25 downward, and goes toward the apex 27 of the space defined by the virtual surface 26. In the vicinity of this apex 27, a vortex of the cooling liquid 49 may be formed. If such a vortex is formed, the shape of the composite jet 59 flowing out from the nozzle 1 becomes unstable.

If the apex 27 is too far above the upper end 10a, the flow of the cooling liquid 49 may be disturbed in the vicinity of the opening of the forming tube 10 independently of the apex 27. The composite jet 59 is affected by the disturbance, stable formation of the film layer 52 is hindered, the film layer 52 is easily cracked, and variation in the particle size of the wet capsule 50w tends to increase. If the apex 27 extends too far into the forming tube 10, the cooling liquid 49 passes through a narrow space surrounded by the forming tube 10 and the nozzle 1, and it becomes difficult to control the flow velocity of the cooling liquid 49. For this reason, when the cooling liquid 49 flows through the flow path within the forming tube 10, shear force generated by the flow of the cooling liquid 49 becomes unstable, and the variation in the particle size of the wet capsule 50w tends to increase.

On the other hand, in the present embodiment, the distance Z between the apex 27 and the upper end 10a of the forming tube 10 satisfies -10 mm ≤ Z ≤ 6 mm. As described above, by adjusting the position of the virtual apex 27 rather than the distal end surface of the nozzle 1, the flow of the cooling liquid 49 flowing into the forming tube 10 can be easily controlled by the inclined portion 25, the film layer 52 can be stably formed, and the variation in the particle size of the wet capsule 50w can be reduced. It is therefore possible to manufacture the high-quality seamless capsule 50 with suppressed film cracking.

If the angle θ formed between a pair of straight lines 25b each connecting the upper end 25c and the lower end 25d of the outer surface 25a of the inclined portion 25 is small, the position of the apex 27 is separated downward from the distal end surface. Then, the flow of the cooling liquid 49 is likely to be disturbed in the vicinity of the lower end of the composite jet 59, and the variation in the particle size of the seamless capsule 50 to be formed tends to increase. On the other hand, if the angle θ is large, the position of the apex 27 is close to the distal end surface. The composite jet 59 is then susceptible to a vortex of the cooling liquid 49 immediately after being discharged. The shape of the composite jet 59 becomes unstable, and the particle size of the seamless capsule 50 to be formed becomes unstable. In the present embodiment, the angle θ is within the range of 20° to 70°. As a result, the particle size of the seamless capsule 50 becomes stable, and the variation in particle size can be suppressed. A lower limit of the angle θ is preferably 30° or more. An upper limit of the angle θ is preferably 60° or less.

As described above, a coefficient of variation of the particle size of the wet capsule 50w is 0.1 or less. In a case where the dry capsule 50d is obtained from the wet capsule 50w as described above, the coefficient of variation of the particle size of the dry capsule 50d is 0.1 or less. In this manner, it is possible to stably manufacture the high-quality seamless capsule 50. The coefficient of variation is a dimensionless statistical value obtained by dividing a standard deviation of a given metric for a plurality of samples by a mean value thereof.

Although the embodiment has been described so far, the above configuration is merely an example, and can be appropriately modified within the scope of the present invention.

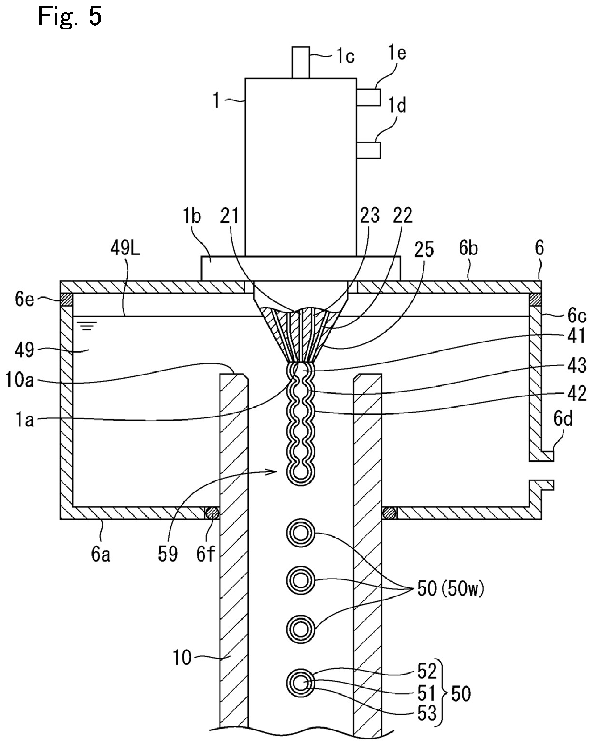

Fig. 5 illustrates a first modification. As illustrated in Fig. 5, the seamless capsule 50 having a three-layer structure may be manufactured. In this case, the nozzle 1 further includes an intermediate nozzle 23 disposed between the central nozzle 21 and the outermost nozzle 22 in the radial direction. The intermediate nozzle 23 is concentric with the central nozzle 21 and the outermost nozzle 22, has an annular cross section, and extends in the axial direction. An upper end of the intermediate nozzle 23 is connected to an intermediate liquid inflow port 1e through which an intermediate liquid 43 supplied from an intermediate liquid tank (not illustrated) flows. A lower end of the intermediate nozzle 23 is open at the distal end surface. The composite jet 59 includes not only the content liquid 41 and the film liquid 42 but also the intermediate liquid 43 interposed therebetween. When the composite jet 59 breaks up into droplets, a seamless capsule 50 including the content 51, the intermediate layer 53, and the film layer 52 is formed in the forming tube 10.

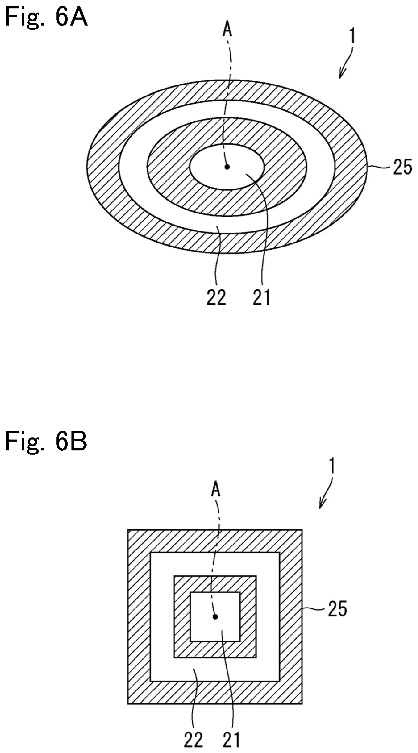

Fig. 6A illustrates a second modification, and Fig. 6B illustrates a third modification. The shape of the horizontal cross section of the outer surface of the inclined portion 25 of the nozzle 1 is not limited to a circular shape. As illustrated in Fig. 6A, the horizontal cross section may be elliptical. As illustrated in Fig. 6B, the horizontal cross section may be polygonal. In Fig. 6B, the polygonal shape is a square shape as a mere example, but the polygonal shape may be a quadrangular shape other than a square shape. Further, the number of corners or sides of the polygonal shape is not limited to four.

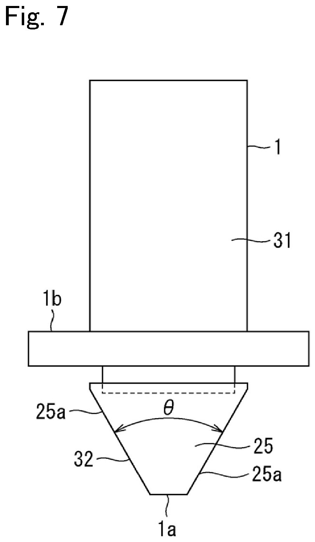

Fig. 7 illustrates a fourth modification. The nozzle 1 may include a cylindrical nozzle main body 31 and a cap 32 that covers a distal end (see a broken line portion) of the nozzle main body 31. The cap 32 forms the inclined portion 25 and the distal end 1a, and is detachably attached to the nozzle main body 31. A plurality of caps 32 having different angles θ may be prepared for one nozzle main body 31, and one cap 32 selected from the plurality of caps 32 may be attached to the nozzle main body 31. This makes it possible to select the cap 32 having an appropriate configuration according to the content liquid or the film liquid.

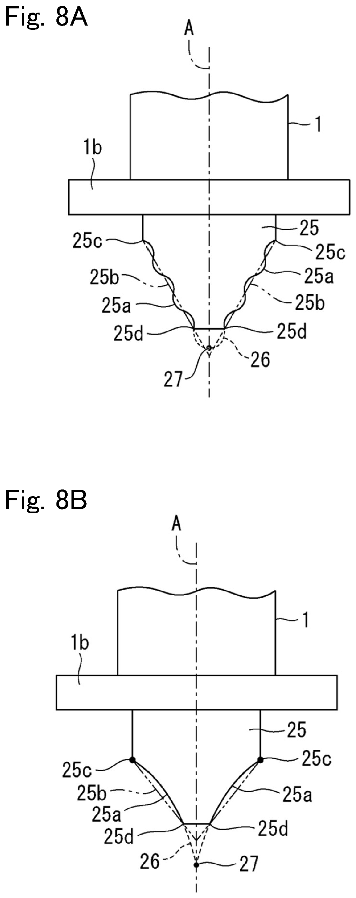

Fig. 8A illustrates a fifth modification, and Fig. 8B illustrates a sixth modification. In the vertical cross section of the nozzle 1 passing through the central axis A of the nozzle 1, in the example illustrated in Figs. 2 and 7, the outline of the outer surface 25b of the inclined portion 25 is one straight line, but the outline is not limited to one straight line. In the fifth modification of Fig. 8A, the outline of the outer surface 25b may be a wavy line or a line similar thereto. In a case where the outline of the outer surface 25b is a wavy line, or the like, the intersection where the downward extension lines of the pair of straight lines 25b intersect each other on the central axis A does not have to coincide with the apex 27 of the space defined by the virtual surface 26.

In the sixth modification of Fig. 8B, the outline of the outer surface 25b may be a bent line or a curved line. In a case where the outline of the outer surface 25b is a curved line, or the like, a portion of the inclined portion 25 primarily involved in control of the flow of the cooling liquid is defined as a main body of the inclined portion 25, a straight line connecting an upper end and a lower end of the outer surface of the main body is defined as the straight line 25b, and a virtual surface obtained by extending the outer surface of the inclined portion 25 downward is defined as the virtual surface 26.

Although detailed illustration is omitted, the second modification or the third modification may be applied to the first modification, and the fourth modification may be applied to the first modification. The second modification or the third modification and the fourth modification may be simultaneously applied to the above embodiment or the first modification. The second modification or the third modification and the fifth modification or the sixth modification may be simultaneously applied to the above embodiment or the first modification.

Hereinafter, the present invention will be described more specifically with reference to Examples and Comparative Examples (Experimental Classifications 1 to 28); however, the present invention is not limited thereto. Note that in the following description, "part" and "%" are by mass unless otherwise specified.

(Experimental Classification 1)

A content liquid consisting of 80 parts by mass of MCT (manufactured by Kao Corporation) was prepared. A film liquid was prepared by mixing 16 parts by mass of gelatin (manufactured by PB Leiner Argentina), 4 parts by mass of sorbitol (manufactured by Roquette China Co., Ltd.), and 300 parts by mass of purified water. A bloom value of the gelatin was 240, and the viscosity of the film liquid was 50 mPa·s at 60°C. A cooling liquid consisting of 100% MCT (manufactured by Kao Corporation) was prepared. Regarding the preparation of these liquids, the same applies to other Experimental Classifications 2 to 28.

Using a seamless capsule manufacturing machine (manufactured by Morishita Jintan Co., Ltd.) having a structure as exemplified in Fig. 1, the content liquid and the film liquid were simultaneously discharged from a central nozzle and an outermost nozzle, respectively, into the cooling liquid to form seamless capsules each having a two-layer structure. Then, the formed seamless capsules were air-dried to evaporate moisture in the film layer, thereby obtaining dry capsules. The mass of the film layer with respect to the total mass of each dry capsule was 30%. Regarding the method for manufacturing the dry capsule and the mass ratio of the film layer described here, the same applies to other Experimental Classifications 2 to 28.

As indicated in Table 1, a first nozzle (1-60) having an inclined portion was used as a nozzle having a central nozzle and an outermost nozzle. The first nozzle (1-60) was formed to have the expected size such that the dry capsule to be manufactured has a particle size of about 1 mm, and an angle (hereinafter, simply "angle θ") formed between the outlines of the inclined portion is 60°. Note that in order to obtain the required particle size, values obtained by dividing a flow rate of the content liquid, a flow rate of the film liquid, and a flow rate of the cooling liquid by a flow path cross-sectional area of the forming tube were adjusted as indicated in Table 1.

A position of the nozzle with respect to the forming tube was adjusted such that a distance (hereinafter, simply "distance Z") between an apex of a space defined by the virtual surface obtained by extending the outer surface of the inclined portion and an upper end of the forming tube was -10.1 mm. A distal end of the nozzle was positioned below the liquid level of the cooling liquid and the composite jet was ejected into the cooling liquid.

(Experimental Classifications 2 to 4)

As indicated in Table 1, in Experimental Classifications 2 to 4, a seamless capsule was formed using the first nozzle in a similar manner as in Experimental Classification 1 except that the distance Z was different from that in Experimental Classification 1.

In Experimental Classification 2, the distance Z was adjusted to -1.8 mm. In Experimental Classification 3, the distance Z was adjusted to 3.2 mm. In Experimental Classification 4, the distance Z was adjusted to 13.2 mm.

(Experimental Classifications 5 to 8)

As indicated in Table 1, in Experimental Classifications 5 to 8, a second nozzle (1-30) including the inclined portion was used as the nozzle having the central nozzle and the outermost nozzle. The second nozzle (1-30) was formed similarly to the first nozzle (1-60) to have the expected size such that the particle size of the dry capsule to be manufactured is about 1 mm, and the angle θ is 30°. The values obtained by dividing the flow rate of the content liquid, the flow rate of the film liquid, and the flow rate of the cooling liquid by the flow path cross-sectional area of the forming tube were adjusted as indicated in Table 1.

In Experimental Classification 5, the distance Z was adjusted to -14.9 mm. In Experimental Classification 6, the distance Z was adjusted to -4.5 mm. In Experimental Classification 7, the distance Z was adjusted to 0.5 mm. In Experimental Classification 8, the distance Z was adjusted to 10.6 mm.

(Experimental Classifications 9 to 12)

As indicated in Table 2, in Experimental Classifications 9 to 12, a third nozzle (5-60) including the inclined portion was used as the nozzle having the central nozzle and the outermost nozzle. The third nozzle (5-60) was formed to have the expected size such that the dry capsule to be manufactured has a particle size of about 5 mm, and the angle θ is 60°. The values obtained by dividing the flow rate of the content liquid, the flow rate of the film liquid, and the flow rate of the cooling liquid by the flow path cross-sectional area of the forming tube were adjusted as indicated in Table 2.

In Experimental Classification 9, the distance Z was adjusted to -19 mm. In Experimental Classification 10, the distance Z was adjusted to -5.7 mm. In Experimental Classification 11, the distance Z was adjusted to -0.7 mm. In Experimental Classification 12, the distance Z was adjusted to 9.3 mm.

(Experimental Classifications 13 to 16)

As indicated in Table 2, in Experimental Classifications 13 to 16, a fourth nozzle (5-40) including the inclined portion was used as the nozzle having the central nozzle and the outermost nozzle. The fourth nozzle (5-40) was formed similarly to the third nozzle (5-60) to have the expected size such that the dry capsule to be manufactured has a particle size of about 5 mm, and the angle θ is 40°. The values obtained by dividing the flow rate of the content liquid, the flow rate of the film liquid, and the flow rate of the cooling liquid by the flow path cross-sectional area of the forming tube were adjusted as indicated in Table 2.

In Experimental Classification 13, the distance Z was adjusted to -30 mm. In Experimental Classification 14, the distance Z was adjusted to -5.8 mm. In Experimental Classification 15, the distance Z was adjusted to -0.8 mm. In Experimental Classification 16, the distance Z was adjusted to 9.2 mm.

(Experimental Classifications 17 to 20)

As indicated in Table 2, in Experimental Classifications 17 to 20, a fifth nozzle (5-30) including the inclined portion was used as the nozzle having the central nozzle and the outermost nozzle. The fifth nozzle (5-30) was formed similarly to the third nozzle (5-60) to have the expected size such that the dry capsule to be manufactured has a particle size of about 5 mm, and the angle θ is 30°. The values obtained by dividing the flow rate of the content liquid, the flow rate of the film liquid, and the flow rate of the cooling liquid by the flow path cross-sectional area of the forming tube were adjusted as indicated in Table 2.

In Experimental Classification 17, the distance Z was adjusted to -36.2 mm. In Experimental Classification 18, the distance Z was adjusted to -6 mm. In Experimental Classification 19, the distance Z was adjusted to -1 mm. In Experimental Classification 20, the distance Z was adjusted to 9 mm.

(Experimental Classifications 21 to 24)

As indicated in Table 3, in Experimental Classifications 21 to 24, a sixth nozzle (8-60) including the inclined portion was used as the nozzle having the central nozzle and the outermost nozzle. The sixth nozzle (8-60) was formed to have the expected size such that the dry capsule to be manufactured has a particle size of about 8 mm, and the angle θ is 60°. The values obtained by dividing the flow rate of the content liquid, the flow rate of the film liquid, and the flow rate of the cooling liquid by the flow path cross-sectional area of the forming tube were adjusted as indicated in Table 3.
In Experimental Classification 21, the distance Z was adjusted to -26 mm. In Experimental Classification 22, the distance Z was adjusted to -9.5 mm. In Experimental Classification 23, the distance Z was adjusted to -4.5 mm. In Experimental Classification 24, the distance Z was adjusted to 6.1 mm.

(Experimental Classifications 25 to 28)

As indicated in Table 3, in Experimental Classifications 25 to 28, a seventh nozzle (8-30) including the inclined portion was used as the nozzle having the central nozzle and the outermost nozzle. The seventh nozzle (8-30) was formed similarly to the sixth nozzle (8-60) to have the expected size such that the dry capsule to be manufactured has a particle size of about 8 mm, and the angle θ is 30°. The values obtained by dividing the flow rate of the content liquid, the flow rate of the film liquid, and the flow rate of the cooling liquid by the flow path cross-sectional area of the forming tube were adjusted as indicated in Table 3.
In Experimental Classification 25, the distance Z was adjusted to -51 mm. In Experimental Classification 26, the distance Z was adjusted to -9.7 mm. In Experimental Classification 27, the distance Z was adjusted to -4.7 mm. In Experimental Classification 28, the distance Z was adjusted to 5.3 mm.

(Examples/Comparative Examples)

Experimental Classifications 2, 3, 6, 7, 10, 11, 14, 15, 18, 19, 22, 23, 26, and 27 are Examples in which the distance Z satisfies -10.0 mm ≤ Z ≤ 6.0 mm. Other Experimental Classifications 1, 4, 5, 8, 9, 12, 13, 16, 17, 20, 21, 24, 25, and 28 are Comparative Examples in which the distance Z is outside the range.

(Evaluation)

Using seamless capsules obtained in each Experimental Classification, the following evaluations were performed.

<Average Value and Coefficient of Variation of Particle Size>

In each of Experimental Classifications 1 to 28, 20 capsules were randomly selected from the obtained wet capsules, and the particle sizes (outer diameters) of the wet capsules were measured one by one with vernier calipers. Based on the particle size data of the 20 capsules, an average value and a standard deviation of the particle sizes of the wet capsules were calculated. Further, the obtained standard deviation was divided by the average value to calculate the coefficient of variation of the particle size of the wet capsules. For the dry capsules, the average value, standard deviation, and coefficient of variation of the particle size of the dry capsules were calculated in a similar manner.
In Examples, the average value of the particle sizes of the dry capsules was as expected or close to the expected value. In Examples, the coefficient of variation was 0.1 or less in both wet capsules and dry capsules, and the variation in the particle size was suppressed.

<Yield Rate of Wet Capsule>

In each of Experimental Classifications 1 to 28, 100 objects (having almost the same size as the wet capsule) formed from the composite jet ejected from the nozzle and flowing down in the forming tube were visually inspected, and among them, the number of debris objects in which the film was cracked and the shape was not spherical was counted. Then, a yield rate was calculated by applying the number of objects and the number of debris to the following equation (1).

$$\text{Yield rate (\%)} = 1 - (\text{the number of debris})/(\text{the number of objects}) \times 100 \cdots$$

Equation (1)

In Examples, a yield rate of at least 97% was achieved, whereas in Comparative Examples, the maximum yield rate was 82% in Experimental Classification 24, and a high yield rate as in Examples could not be obtained.

[Table 1]

| Experimental Classification | | 1-60 | | | | 1-30 | | | |
|---|---|---|---|---|---|---|---|---|---|
| | | 1 | 2 | 3 | 4 | 5 | 6 | 7 | 8 |
| | | Comparative Example | Example | Example | Comparative Example | Comparative Example | Example | Example | Comparative Example |
| Angle θ | [°] | 60 | 60 | 60 | 60 | 30 | 30 | 30 | 30 |
| Distance Z | [mm] | -10.1 | -1.8 | 3.2 | 13.2 | -14.9 | -4.5 | 0.5 | 10.6 |
| Content liquid flow rate | [g/min.] | 7.6 | 7.6 | 7.6 | 7.6 | 7.6 | 7.6 | 7.6 | 7.6 |
| Film liquid flow rate | [g/min.] | 21.6 | 21.6 | 21.6 | 21.6 | 21.6 | 21.6 | 21.6 | 21.6 |
| Value obtained by dividing cooling liquid flow rate by flow path cross-sectional area of forming tube | [g/min./mm$^2$] | 36.0 | 36.0 | 36.0 | 36.0 | 36.0 | 36.0 | 36.0 | 36.0 |
| Average value of particle sizes of wet capsules | [mm] | 1.4 | 1.4 | 1.4 | 1.4 | 1.5 | 1.4 | 1.4 | 1.5 |
| Average value of particle sizes of dry capsules | [mm] | 1.0 | 1.0 | 1.0 | 1.0 | 1.1 | 1.0 | 1.0 | 1.0 |
| Yield rate of wet capsule | [%] | 58 | 99 | 95 | 49 | 47 | 98 | 99 | 52 |
| Coefficient of variation of particle size of wet capsules | CV | 0.11 | 0.02 | 0.05 | 0.12 | 0.18 | 0.02 | 0.02 | 0.29 |
| Coefficient of variation of particle size of dry capsules | CV | 0.12 | 0.01 | 0.04 | 0.11 | 0.17 | 0.03 | 0.03 | 0.27 |

[Table 2]

| Experimental Classification | | 5-60 | | | | 5-40 | | | | 5-30 | | | |
|---|---|---|---|---|---|---|---|---|---|---|---|---|---|
| | | 9 | 10 | 11 | 12 | 13 | 14 | 15 | 16 | 17 | 18 | 19 | 20 |
| | | Comparative Example | Example | Example | Comparative Example | Comparative Example | Example | Example | Comparative Example | Comparative Example | Example | Example | Comparative Example |
| Angle θ | [°] | 60 | 60 | 60 | 60 | 40 | 40 | 40 | 40 | 30 | 30 | 30 | 30 |
| Distance Z | [mm] | -19 | -5.7 | -0.7 | 9.3 | -30 | -5.8 | -0.8 | 9.2 | -36.2 | -6 | -1 | 9 |
| Content liquid flow rate | [g/min.] | 85.2 | 85.2 | 85.2 | *85.2* | 85.2 | 85.2 | 85.2 | 85.2 | 85.2 | 85.2 | 85.2 | 85.2 |
| Film liquid flow rate | [g/min.] | 146.1 | 146.1 | 146.1 | 146.1 | 146.1 | 146.1 | 146.1 | 146.1 | 146.1 | 146.1 | 146.1 | 146.1 |
| Value obtained by dividing cooling liquid flow rate by flow path cross-sectional area of forming tube | [g/min./mm$^2$] | 14.4 | 14.4 | 14.4 | 14.4 | 14.4 | 14.4 | 14.4 | 14.4 | 14.4 | 14.4 | 14.4 | 14.4 |
| Average value of particle sizes of wet capsules | [mm] | 6.7 | 6.2 | 6.2 | 6.5 | 6.8 | 6.2 | 6.2 | 6.6 | 6.8 | 6.2 | 6.2 | 6.5 |
| Average value of particle sizes of dry capsules | [mm] | 5.4 | 5.0 | 5.0 | 5.2 | 5.1 | 5.0 | 5.0 | 5.4 | 5.5 | 5.0 | 5.0 | 5.2 |
| Yield rate of wet capsule | [%] | 59 | 100 | 100 | 45 | 38 | 97 | 100 | 53 | 43 | 99 | 100 | 55 |
| Coefficient of variation of particle size of wet capsules | CV | 0.31 | 0.03 | 0.02 | 0.21 | 0.35 | 0.02 | 0.01 | 0.27 | 0.42 | 0.04 | 0.02 | 0.23 |

| Experimental Classification | | 5-60 | | | | 5-40 | | | | 5-30 | | | |
|---|---|---|---|---|---|---|---|---|---|---|---|---|---|
| | | 9 | 10 | 11 | 12 | 13 | 14 | 15 | 16 | 17 | 18 | 19 | 20 |
| | | Comparative Example | Example | Example | Comparative Example | Comparative Example | Example | Example | Comparative Example | Comparative Example | Example | Example | Comparative Example |
| Coefficient of variation of particle size of dry capsules | CV | 0.29 | 0.02 | 0.02 | 0.20 | 0.30 | 0.02 | 0.01 | 0.23 | 0.38 | 0.03 | 0.02 | 0.22 |

[Table 3]

| Experimental Classification | | 8-60 | | | | 8-30 | | | |
|---|---|---|---|---|---|---|---|---|---|
| | | 21 | 22 | 23 | 24 | 25 | 26 | 27 | 28 |
| | | Comparative Example | Example | Example | Comparative Example | Comparative Example | Example | Example | Comparative Example |
| Angle θ | [°] | 60 | 60 | 60 | 60 | 30 | 30 | 30 | 30 |
| Distance Z | [mm] | -26 | -9.5 | -4.5 | 6.1 | -51 | -9.7 | -4.7 | 5.3 |
| Content liquid flow rate | [g/min.] | 116.4 | 116.4 | 116.4 | 116.4 | 116.4 | 116.4 | 116.4 | 116.4 |
| Film liquid flow rate | [g/min.] | 199.5 | 199.5 | 199.5 | 199.5 | 199.5 | 199.5 | 199.5 | 199.5 |
| Value obtained by dividing cooling liquid flow rate by flow path cross-sectional area of forming tube | [g/min./mm$^2$] | 7.7 | 7.7 | 7.7 | 7.7 | 7.7 | 7.7 | 7.7 | 7.7 |
| Average value of particle sizes of wet capsules | [mm] | 11.7 | 10.2 | 10.1 | 10.5 | 10.5 | 9.9 | 10.0 | 9.9 |
| Average value of particle sizes of dry capsules | [mm] | 9.5 | 8.2 | 8.1 | 8.4 | 8.4 | 7.9 | 8.0 | 8.0 |
| Yield rate of wet capsule | [%] | 23 | 99 | 100 | 82 | 63 | 98 | 99 | 34 |
| Coefficient of variation of particle size of wet capsules | CV | 0.40 | 0.06 | 0.04 | 0.13 | 0.14 | 0.02 | 0.01 | 0.13 |
| Coefficient of variation of particle size of dry capsules | CV | 0.37 | 0.05 | 0.04 | 0.11 | 0.12 | 0.02 | 0.03 | 0.11 |

# EP 4 786 040 A1

The present disclosure may include the following aspects.

(Aspect 1)

A method for manufacturing a seamless capsule, the method comprising:

dropping droplets from a distal end of a nozzle into cooling liquid in a flow path within a forming tube to form a seamless wet capsule from the droplets,
wherein the nozzle includes an inclined portion that is inclined toward an inside of the nozzle as the inclined portion extends from an intermediate portion of the nozzle toward the distal end,
a distance Z, defined as a distance between an apex of a space defined by a virtual surface obtained by extending an outer surface of the inclined portion downward beyond the distal end and an upper end of the forming tube, satisfies -10 mm $\leq$ Z $\leq$ 6 mm, and
when Z < 0, the apex is located below the upper end of the forming tube, and when Z > 0, the apex is located above the upper end of the forming tube.

(Aspect 2)

The method for manufacturing a seamless capsule according to Aspect 1, in which, in a vertical cross section of the nozzle passing through a central axis of the nozzle, an angle formed between a pair of straight lines each connecting an upper end and a lower end of the outer surface of the inclined portion is within a range of 20° to 70°.

(Aspect 3)

The method for manufacturing a seamless capsule according to Aspect 1 or 2, in which, in a horizontal cross section of the nozzle orthogonal to a central axis of the nozzle, an outer outline of the inclined portion is circular, elliptical, or polygonal.

(Aspect 4)

The method for manufacturing a seamless capsule according to any one of Aspects 1 to 3, in which a coefficient of variation of a particle size of the wet capsules is 0.1 or less.

(Aspect 5)

The method for manufacturing a seamless capsule according to any one of Aspects 1 to 4, in which the dropping of the droplets to form the wet capsule includes positioning the distal end of the nozzle below a liquid level of the cooling liquid.

(Aspect 6)

The method for manufacturing a seamless capsule according to any one of Aspects 1 to 5, further comprising drying the wet capsule to obtain a dry capsule.

(Aspect 7)

The method for manufacturing a seamless capsule according to Aspect 6, in which a coefficient of variation of a particle size of the dry capsules is 0.1 or less.

(Aspect 8)

The method for manufacturing a seamless capsule according to any one of Aspects 1 to 7, in which

the cooling liquid flowing into the forming tube is stored in a cooling liquid reservoir,
the inclined portion and an upper end portion of the forming tube are arranged in the cooling liquid reservoir,
the cooling liquid reservoir includes a bottom wall, an upper wall, and a peripheral wall, and
at least one portion of the nozzle, the upper wall, or the forming tube is configured to be vertically movable along a central axis of the nozzle.

EP 4 786 040 A1

REFERENCE SIGNS LIST

| | |
|---|---|
| 1 | nozzle |
| 1a | distal end |
| 1b | flange portion |
| 1c | content liquid inflow port |
| 1d | film liquid inflow port |
| 1e | intermediate liquid inflow port |
| 2 | content liquid tank |
| 2a | content liquid supply pipe |
| 3 | film liquid tank |
| 3a | film liquid supply pipe |
| 6 | cooling liquid reservoir |
| 6a | bottom wall |
| 6b | upper wall |
| 6c | peripheral wall |
| 6d | cooling liquid inflow port |
| 6e | spacer |
| 6f | sealing |
| 7 | cooling liquid tank |
| 8 | cooling liquid supply pipe |
| 9 | cooling device |
| 10 | forming tube |
| 10a | upper end |
| 11 to 13 | pump |
| 14 | screen |
| 15 | dryer |
| 21 | central nozzle |
| 22 | outermost nozzle |
| 23 | intermediate nozzle |
| 25 | inclined portion |
| 25a | outer surface |
| 25b | straight line |
| 25c | upper end |
| 25d | lower end |
| 26 | virtual surface |
| 27 | apex |
| 31 | nozzle main body |
| 32 | cap |
| 41 | content liquid |
| 42 | film liquid |
| 43 | intermediate liquid |
| 49 | cooling liquid |
| 49L | liquid level |
| 50 | seamless capsule |
| 50w | wet capsule |
| 50d | dry capsule |
| 51 | content |
| 52 | film layer |
| 53 | intermediate layer |
| 59 | composite jet |
| A | central axis |
| Z | distance |
| H | distance |
| θ | angle |

16

**Claims**

1. A method for manufacturing a seamless capsule, the method comprising:

dropping droplets from a distal end of a nozzle into cooling liquid in a flow path within a forming tube to form a seamless wet capsule from the droplets,
wherein the nozzle includes an inclined portion that is inclined toward an inside of the nozzle as the inclined portion extends from an intermediate portion of the nozzle toward the distal end,
a distance Z, defined as a distance between an apex of a space defined by a virtual surface obtained by extending an outer surface of the inclined portion downward beyond the distal end and an upper end of the forming tube, satisfies -10 mm $\leq$ Z $\leq$ 6 mm, and
when Z < 0, the apex is located below the upper end of the forming tube, and when Z > 0, the apex is located above the upper end of the forming tube.

2. The method according to claim 1, wherein, in a vertical cross section of the nozzle passing through a central axis of the nozzle, an angle formed between a pair of straight lines each connecting an upper end and a lower end of the outer surface of the inclined portion is within a range of 20° to 70°.

3. The method according to claim 1 or 2, wherein, in a horizontal cross section of the nozzle orthogonal to a central axis of the nozzle, an outer outline of the inclined portion is circular, elliptical, or polygonal.

4. The method according to any one of claims 1 to 3, wherein a coefficient of variation of a particle size of the wet capsules is 0.1 or less.

5. The method according to any one of claims 1 to 4, wherein the dropping of the droplets to form the wet capsule includes positioning the distal end of the nozzle below a liquid level of the cooling liquid.

6. The method according to any one of claims 1 to 5, further comprising drying the wet capsule to obtain a dry capsule.

7. The method according to claim 6, wherein a coefficient of variation of a particle size of the dry capsules is 0.1 or less.

8. The method according to any one of claims 1 to 7, wherein

the cooling liquid flowing into the forming tube is stored in a cooling liquid reservoir,
the inclined portion and an upper end portion of the forming tube are arranged in the cooling liquid reservoir,
the cooling liquid reservoir includes a bottom wall, an upper wall, and a peripheral wall, and
at least one portion of the nozzle, the upper wall, or the forming tube is configured to be vertically movable along a central axis of the nozzle.

Fig. 1

# Fig. 2

Fig. 3

Fig. 4

Fig. 5

Fig. 6A

Fig. 6B

Fig. 7

Fig. 8A

A

1b

25c

25

25c

25b

25a

25a

25b

25d

25d

26

27

Fig. 8B

A

1b

1

25

25c

25c

25b

25a

25a

25d

25d

26

27

## INTERNATIONAL SEARCH REPORT

International application No.

**PCT/JP2024/030382**

### A. CLASSIFICATION OF SUBJECT MATTER

**B01J 2/06**(2006.01)i; **B01J 13/06**(2006.01)i

FI: B01J2/06; B01J13/06

According to International Patent Classification (IPC) or to both national classification and IPC

### B. FIELDS SEARCHED

Minimum documentation searched (classification system followed by classification symbols)

A61J1/00-19/06; A61K9/00-9/72; A61K47/00-47/69; B01J2/00-2/30; B01J13/02-13/22

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2002-136576 A (CHUGAI SEIYAKU KABUSHIKI KAISHA) 14 May 2002 (2002-05-14) entire text, all drawings | 1-8 |
| A | JP 2018-108958 A (SANSHO PHARMA) 12 July 2018 (2018-07-12) entire text, all drawings | 1-8 |
| A | JP 2018-115144 A (MORISHITA JINTAN CO.) 26 July 2018 (2018-07-26) entire text, all drawings | 1-8 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 October 2024** | **22 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/030382**

| Patent document cited in search report | | | Publication date (day/month/year) | Patent family member(s) | | | Publication date (day/month/year) |
|---|---|---|---|---|---|---|---|
| JP | 2002-136576 | A | 14 May 2002 | US 2003/0180485 A1 the whole document | | | |
| JP | 2018-108958 | A | 12 July 2018 | (Family: none) | | | |
| JP | 2018-115144 | A | 26 July 2018 | EP 3572062 A1 the whole document | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002136576 A